# EUROPÄISCHE PATENTSCHRIFT

(11) **EP 2 066 200 B1**
(45) Veröffentlichungstag und Bekanntmachung des Hinweises auf die Patenterteilung: **03.12.2014**
(21) Anmeldenummer: 07803390.9
(22) Anmeldetag: 11.09.2007
(51) Int. Cl.: A47J 19/00, A47J 43/07

(54) **PASSIERGERÄT**
STRAINING DEVICE
PASSE-LÉGUMES

(30) Priorität: 13.09.2006 DE 102006042990
(43) Veröffentlichungstag der Anmeldung: 10.06.2009
(73) Patentinhaber: BSH Bosch und Siemens Hausgeräte GmbH, 81739 München (DE)
(72) Erfinder: BRECKO, Ales, 1241 Kamnik (SI); MAZEJ, Stanislav, 3303 Gomilsko (SI); ZIBRET, Igor, 3327 Smartno ob Paki (SI); BLAGOTINSEK, Andrej, 2380 Slovenj Gradec (SI)
(86) Internationale Anmeldenummer: PCT/EP2007/059492
(87) Internationale Veröffentlichungsnummer: WO 2008/031803

(56) Entgegenhaltungen:
- EP-B- 1 272 079
- WO-A2-2007/130197
- DE-C- 627 492
- DE-C- 640 660
- DE-C- 827 843
- FR-A- 931 991
- FR-A- 1 501 875
- GB-A- 659 047
- GB-A- 772 146
- GB-A- 835 167

## Beschreibung

### Hintergrund der Erfindung

Die vorliegende Erfindung betrifft ein Passiergerät für die Verwendung mit einer Küchenmaschine gemäß dem Oberbegriff des Anspruchs 1.

### Stand der Technik

Aus der europäischen Patentschrift EP 1272079 B1 ist ein Passiergerät für eine Küchenmaschine bekannt, das aus einem topfförmig ausgebildeten Siebteil und einem propellerartigen Passierwerkzeug besteht. Der trichterartig zur Mitte hin abfallende Topfboden des Siebteils ist mit zahlreichen Durchtrittsöffnungen versehen. Der Topfboden des Siebteils ist vom einem kreiszylindrischen Topfmantel kragenförmig umschlossen. In dem Siebteil ist das Passierwerkzeug angeordnet. Es besteht aus einem glockenförmigen Nabenteil, mit dem es an eine Welle der die Küchenmaschine ankuppelbar ist, um das Passierwerkzeug rotierend anzutreiben. An der Außenseite des Nabenteiles sind zwei sich nach radial außen erstreckende Passierflügel angeformt. Wird das Werkzeug in Rotation versetzt, pressen die Passierflügel das Passiergut durch die Durchtrittsöffnungen des Topfbodens des Siebteils.

Aus der deutschen Patentschrift 827 843 ist eine mit einer Handkurbel betriebene Vorrichtung zum Durchsieben, insbesondere für Haushaltszwecke, bekannt. Die Vorrichtung umfasst einen in seinem unteren Bereich als Pyramidenstumpf mit acht Seiten ausgebildeten Behälter, dessen Boden als Sieb ausgebildet ist. Außerdem ist ein Druckglied vorgesehen, das mit der Handkurbel in Drehung versetzt werden kann.

Außerdem offenbart die deutsche Offenlegungsschrift DE 43 22 280 A1 einen Arbeitsbehälter für eine elektrisch betriebene Haushaltsküchenmaschine, in dem ein messerartiges Arbeitswerkzeug rotieren kann. Die Innenwand des Arbeitsbehälters hat die Form eines regelmäßigen fünfzehn-seitigen Polygons. Diese Form der Innenwand soll das Zerkleinern z.B. von Petersilie und Zwiebeln dadurch unterstützen, dass solche Nahrungsmittel, wenn sie auf die Innenwandung aufprallen von dieser wieder zurück zum Messer geschleudert werden.

Die DE 640 660 offenbart eine Vorrichtung zum Zerkleinern von Speisen u. dgl. mit einem siebartigen Boden und einem sich drehenden Preßkörper. Das durchzutreibende Mischgut wird mittels einer speziell ausgebildeten Querwand festgehalten, so dass ein Mitschleifen verhindert werden kann.

Eine weitere Zerkleinerungsvorrichtung ist in der GB 835 167 offenbart.

Aus der FR 1 501 875 A und der GB 772 146 A sind Passiergeräte bekannt, die manuell antreibbar sind und bei denen an den äußeren Enden der Passierflügel jeweils ein Winglet vorgesehen ist.

### Der Erfindung zugrundeliegende Aufgabe

Passiergeräte der bekannten Art werden vorwiegend zur Verarbeitung weich gekochter Früchte und Gemüse eingesetzt. Es kann jedoch wünschenswert sein, auch reife Tomaten oder andere, ungekochte Früchte oder Gemüse mit dem Gerät zu passieren. Bei dem bekannten Passiergerät kann dies Schwierigkeiten bereiten, weil solches Passiergut Bestandteile aufweist, die zu fest sind, um durch das Sieb passiert werden zu können.

Demnach liegt der Erfindung die Aufgabe zugrunde, ein Passiergerät bereitzustellen, mit dem sich ungekochte Früchte, insbesondere reife Tomaten, besser passieren lassen.

### Erfindungsgemäße Lösung

Zu Lösung der Aufgabe lehrt die Erfindung ein Passiergerät mit den Merkmalen des Anspruchs 1.

Während der Topfmantel des Siebteils des bekannten Passiergeräts kreiszylindrisch mit der Drehachse des Passierwerkzeugs als Kreismittelpunkt ausgebildet ist, weist der Mantel beim erfindungsgemäßen Passiergerät mindestens einen nieschenartigen Abschnitt auf, in dem sich festere Bestandteile des Passierguts vorübergehend verfangen können. Derart fixiert können sie anschließend von einer Kante des rotierenden Passierwerkzeugs zerteilt werden. Auf diese Weise können bei dem erfindungsgemäßen Passiergerät festere Bestandteile des Passierguts so weit zerkleinert werden, dass sie durch das Passiersieb passierbar sind.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung ist der Querschnitt der Innenseite des Topfmantels in einer Ebene senkrecht zur Drehachse ein Vieleck. Auf diese Weise kann durch jede Ecke des Vielecks eine erfindungsgemäße Nische gebildet werden. Das Vieleck ist vorzugsweise gleichseitig und/oder gleichwinklig, besonders vorzugsweise regelmäßig. Es sind aber auch andere Querschnittsformen des Topfmantels denkbar, z.B. eine geschlossene Schlangenlinie oder eine, vorzugsweise verkürzte, Epi- oder Hypozykloide. In einer Ausführung hat der Topfmantel einen kreisförmigen Innenquerschnitt, wobei allerdings die Drehachse exzentrisch angebracht ist, sodass die Innenseite des Topfmantels, die weiter von der Drehachse entfernt ist, die einzige Nische bildet. In anderen Ausführungen der Erfindung ist der Querschnitt im Wesentlichen elliptisch oder oval. Ein solcher Topf weist zwei Nischen auf und zwar im Bereich der Hauptscheitel.

Vorzugsweise weist der Topfmantel 3 oder mehr, besonders vorzugsweise 6 oder mehr, besonders vorzugsweise 10 oder mehr Nischen auf. Außerdem weist der Topfmantel vorzugsweise 50 oder weniger, besonders vorzugsweise 30 oder weniger, besonders vorzugsweise 20 oder weniger, besonders vorzugsweise 15 oder weniger Nischen auf. Ein besonders bevorzugter Topfmantel weist 12 Nischen auf.

Bei einem bevorzugten Passiergerät ist die Innenseite des Topfbodens des Siebteils nach innen gewölbt. Dies kann dazu beitragen, dass das Passiergut während des Betriebs des Passiergeräts radial nach außen zum Topfmantel hin befördert wird, wo es wie oben beschrieben in den Nischen zerteilt werden kann. Das Passierwerkzeug ist im Siebteil vorzugsweise so anordnbar, dass eine bei einer vorgesehenen Drehrichtung im Betrieb nacheilende Kante des Passierflügels in geringem Abstand über dem Topfboden rotiert. Besonders vorzugsweise verläuft die nacheilende Kante des Passierflügels in Anpassung an den konvex gewölbten Topfboden des Siebteiles entsprechend geneigt.

Ein bevorzugter Passierflügel ist in Umfangsrichtung derart angestellt, dass bei der vorgesehenen Drehrichtung des Flügels die voreilende Kante des Passierflügels gegenüber der nacheilenden Kante angehoben ist. Dies kann dazu beitragen, dass das Passiergut unter den Passierflügel gelangt und dann zerdrückt und durch die Durchtrittsöffnungen gedrückt wird.

Die bei der vorgesehenen Drehrichtung voreilende Kante des Passierflügels ist vorzugsweise wenigstens auf einem Teilabschnitt mit einer ersten Schneidkante ausgestattet. Diese Schneidkante kann das Passiergut zerkleinern oder wenigstens zur Zerkleinerung des Passierguts beitragen. Besonders vorzugsweise ist wenigstens ein äußerer Abschnitt der voreilenden Kante als Schneidkante ausgebildet. Besonders vorzugsweise ist die gesamte voreilende Kante des Passierflügels als Schneidkante ausgebildet. Vorzugsweise verläuft die bei einer vorgesehenen Drehrichtung voreilende Kante des Passierflügels zumindest in einem äußeren Abschnitt mit zunehmendem Abstand von dem Nabenteil entgegen der vorgesehenen Drehrichtung. Dies kann dazu beitragen, dass das Passiergut während des Betriebs des Passiergeräts radial nach außen zum Topfmantel hin befördert wird. Insbesondere kann diese Ausgestaltung der Erfindung dazu beitragen, dass Passiergut zwischen der voreilenden Kante und der Nische des Topfmantel eingeklemmt wird, um zerkleinert zu werden.

Gemäß der Erfindung ist am äußeren Enden des Passierflügels eine in Längsrichtung des Topfmantels verlaufende zweite Schneidkante angeordnet. Diese Schneidkane kann dazu beitragen, Passiergut in der Nische des Topfmantels zu zerkleinern. Erfindungsgemäß bildet die zweite Schneidkante die bei einer vorgesehenen Drehrichtung voreilende Kante eines am Ende des Passierflügels angeordneten Winglets. Das Winglet kann weiterhin als Löffel dienen, um Passiergut aus der Nische herauszuschöpfen.

Ein bevorzugtes Passierwerkzeug umfasst zwei, im Wesentlichen identische Passierflügel, die auf gegenüberliegenden Seiten am Nabenteil angeordnet sind. Es sind aber auch Ausführungen der Erfindung mit drei, vier oder mehr Passierflügeln denkbar. Bei Ausführungen mit mehreren Passierflügeln sind diese vorzugsweise gleichmäßig um das Nabenteil angeordnet.

Ein bevorzugter Topfboden des Siebteils weist eine Öffnung für das Nabenteil des Passierwerkzeugs auf. Außerdem ist das Nabenteil oder das Siebteil mit mindestens einem Rastelement ausgestattet, das mit den anderen der beiden Teile zusammenwirkt, um das Siebteil und das Passierwerkzeug lösbar miteinander zu verbinden. Vorzugsweise ist das Nabenteil mit einem Rastelement, besonders vorzugsweise zwei Rastelementen versehen, die mit dem Rand der Öffnung zusammenwirken. Das Rastelement kann die Handhabung des erfindungsgemäßen Passiergeräts erleichtern, weil das Gerät als ein Teil handhabbar ist. Außerdem kann im Betrieb einem Abheben des Passierwerkzeugs gegenüber dem Siebteil entgegengewirkt werden. Dennoch kann es zu Reinigungszwecken auseinander genommen werden. In einer Bevorzugten Ausführung der Erfindung weist das Nabenteil eine, vorzugsweise zwei sich parallel zur Drehachse von der Seite der Passierflügel nach unten durch die Öffnung erstreckende Zungen auf, die an ihrem unteren Ende jeweils einen nach außen gerichteten Vorsprung haben. Der Vorsprung kann unter den Rand der Öffnung greifen und so das Passierwerkzeug mit dem Siebteil verbinden. Die Verbindung ist so ausgestaltet, dass die Nabe sich im Wesentlichen durch die Verbindung ungestört drehen kann. Um eventuell auftretende Reibung zwischen dem Rand der Öffnung und dem Nabenteil zu minimieren, ist der Rand der Öffnung vorzugsweise mit einem Metallring abgedeckt. Die Zunge ist vorteilhafterweise senkrecht zu ihrer Längsrichtung elastisch verbiegbar. Dadurch kann die Verbindung durch Biegen der Zunge nach innen von einem Benutzer gelöst werden.

Zumindest ein Teil der Durchtrittsöffnungen des Siebteiles sind vorzugsweise in an dessen Topfboden ausgeprägten, sich strahlenförmig erstreckenden Bodenvertiefungen vorgesehen, wobei die Bodenvertiefungen einen keilförmigem Querschnitt mit einer in Drehrichtung der Passierflügel voraneilenden abfallenden Flanke aufweisen. Dies kann dadurch zur Erhöhung der Leistungsfähigkeit des Passiergeräts beitragen, dass sich durch den keilförmigem Querschnitt eine in Drehrichtung der Passierflügel liegende scharfe Eckkante ergibt, die mit der bei der vorgegebenen Drehrichtung nacheilenden Kante des Passierflügels einen Schneidspalt bilden. Hierdurch können festere Bestandteile des Passiergutes zerkleinert werden.

Vorzugsweise bilden die Bodenvertiefungen in ihrer Strahlrichtung einen entgegen der Drehrichtung der Passierflügel gebogenen sichelförmigen Verlauf. Dies kann dadurch zu einem weitgehend stoßfreien Arbeiten des Passiergerätes beitragen, dass die Eckkanten der Bodenvertiefungen und die Schneidkanten wegen des sichelförmigen Verlaufes der Eckkanten in Richtung der radialen Erstreckung der Passierflügel nur nach und nach in Überschneidung kommen.

Die Durchtrittsöffnungen sind vorzugsweise zu der Austrittsseite des Passiergutes hin in ihrem Querschnitt erweitert. Dies kann einem Verstopfen der Durchtrittsöffnungen des Siebteiles entgegenwirken.

Das erfindungsgemäße Passiergerät ist für den Einsatz mit einer Küchenmaschine vorgesehen. Vorzugsweise ist das Siebteil drehfest in eine Rührschüssel der Küchenmaschine einsetzbar. Auf diese Weise kann erreicht werden, dass die Nabe des Passierwerkzeugs von einer aus der Rührschüssel herausragenden Antriebswelle der Küchenmaschine antreibbar ist. Außerdem ist erreichbar, dass das durch das Siebteil passierte Passiergut in der Rührschüssel gesammelt werden kann. Zur Verdrehsicherung sind vorzugsweise an dem Siebteil Rippenansätze vorgesehen, die mit entsprechenden an der Rührschüssel ausgebildeten Rippen zusammenwirken. Das Passiergerät kann vorzugsweise mit einem Deckel abgedeckt werden, der auf seiner Unterseite einen ringförmigen Vorsprung aufweist. Der Vorsprung kommt bei aufgesetztem Deckel vorteilhaft im oberen Bereich des Topfmantels auf dessen Innenseite zum liegen. So kann vermieden werden, dass unpassiertes Passiergut über den Rand des Topfmantels in die Rührschüssel gelangt.

Vorzugsweise sind das Passierwerkzeug und das Siebteil aus Kunststoff gebildet, besonders vorzugsweise im Spritzgussverfahren. Es sind aber auch Ausführungen der Erfindung denkbar, bei denen Teile des Passiergeräts, insbesondere die Passierflügel, das gesamte Passierwerkzeug oder sogar das ganze Passiergerät, aus Metall gefertigt sind.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: Eine Ansicht eines erfindungsgemäßen Passiergeräts von oben;
- Fig. 2:: Eine Querschnittsansicht des erfindungsgemäßen Passiergeräts;
- Fig. 3:: Eine perspektivische Ansicht eines erfindungsgemäßen Passierwerkzeugs; und
- Fig. 4:: Eine perspektivische Ansicht eines erfindungsgemäßen Siebteils.

### Ausführliche Beschreibung eines Ausführungsbeispiels

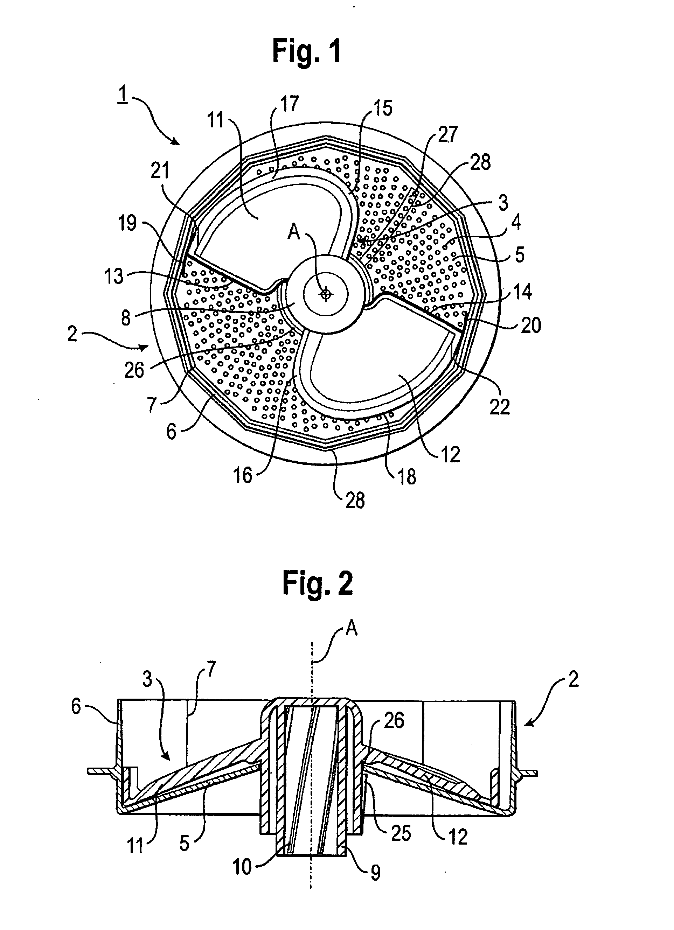

Das in Figuren 1 und zwei dargestellte Passiergerät 1 ist für die Verwendung mit einer Küchenmaschine vorgesehen. Es umfasst ein topfförmiges Siebteil 2 und ein propellerartiges Passierwerkzeug 3. Das Passierwerkzeug 3 kann um seine Mittelachse A rotierend angetrieben werden. Das topfförmige Siebteil 2 umfasst einen mit zahlreichen Durchtrittsöffnungen (von denen eine exemplarisch mit 4 bezeichnet ist) versehenen Topfboden 5, der bei Blickrichtung von oben in das Siebteil 2 hinein von der Mitte ausgehend nach außen hin konvex abfällt. Der Topfboden 5 ist von einem allgemein hohlzylindrischen Topfmantel 6 kragenartig umgeben, wobei der Querschnitt des Topfmantels 6 ein regelmäßiges Zwölfeck ist. Es bildet an jeder der zwölf Ecken eine von zwölf Nischen (von denen eine exemplarisch mit 7 bezeichnet ist) auf der Innenseite des Topfmantels 6, die einen größeren Abstand von der Mittelachse A haben als die dazwischen liegenden Abschnitte des Topfmantels 6. In den Nischen 7 kann Passiergut im Betrieb vorübergehend festgehalten werden, um von dem Passierwerkzeug 3 zerteilt zu werden, wie weiter unten beschrieben.

Durch die Durchtrittsöffnungen 4 der Topfbodens 5 kann beim Betrieb mittels des Passierwerkzeugs 3 Passiergut gepresst werden. Die Durchtrittsöffnungen 4 sind zu der Austrittsseite des Passiergutes hin konisch erweitert, um ein Verstopfen der Durchtrittsöffnungen 4 zu vermeiden.

Das Passierwerkzeug 3 umfasst ein zentrales Nabenteil 8 mit dem es auf eine von einem Motor angetriebene Antriebswelle der Küchenmaschine aufgesetzt werden kann, um um die Achse A rotieren angetrieben zu werden. Dazu weist die Nabe 8 eine zentrale, einseitig nach unten offene Hülse 9 auf, die auf ihrer Innenseite mit sich gewindeartig in Längsrichtung der Hülse 9 erstreckenden Vorsprüngen 10 versehen ist, wobei der Drehsinn des Gewindes von oben gesehen entgegen der vorgesehenen Drehrichtung des Passierwerkzeugs 3 verläuft. An die Vorsprünge können entsprechende Gegenstücke der Antriebswelle eingreifen, um das Passierwerkzeug 3 drehfest an der Welle anzubringen. Durch die Gewinderichtung ist sichergestellt, dass eine Kraft in Umfangsrichtung, die dadurch zustande kommt, dass das Passierwerkzeug 3 im Betrieb durch das Passiergut einen Widerstand erfährt, zum Teil in eine Kraft nach unten umgesetzt wird, die das Passierwerkzeug 3 daran hindert, nach oben von der Welle abzuheben.

An der Außenseite des eine Nabenteiles 3 sind zwei sich nach radial außen erstreckende Passierflügel 11, 12 angeformt. Diese Passierflügel 11, 12 befinden sich beim Betrieb im Inneren des topfförmigen Siebteils 2. Die im Betrieb nacheilende Kanten 13, 14 der Passierflügel 11, 12 rotieren dabei in geringem Abstand über dem Topfboden 5, wie in Fig. 2 erkennbar ist. Dadurch wird die Menge des unter den Flügeln 11, 12 durchgleitenden Passiergutes wesentlich reduziert. Außerdem sind die Passierflügel 11, 12 so angestellt, dass die vorauseilenden Kanten 15, 16 gegenüber den nacheilenden Kanten 13, 14 angehoben sind. Passiergut gelangt so beim Betrieb unter die Flügel 11, 12 und durch wird die Durchtrittsöffnungen 4 des Topfbodens 5 gerückt.

Die vorauseilenden Kanten 15, 16 sind als Schneidkanten ausgebildet, die Passiergut zerschneiden können. Außerdem verlaufen die äußeren Abschnitte 17, 18 der Schneidkanten 15, 16 mit zunehmendem Abstand von dem Nabenteil 8 entgegen der vorgesehenen Drehrichtung nach hinten, sodass ein V-förmig zulaufender Spalt zwischen Schneidkanten 15, 16 und Topfmantel 6 entsteht. Die Schneidkanten 15, 16 können so im Betrieb Passiergut in die Nischen 7 des Topfmantels 6 befördern und dort zerkleinern.

Die Passierflügel 11, 12 weisen außerdem jeweils an ihren Enden ein Winglet 19, 20 auf, das sich senkrecht parallel zum Topfmantel 5 erstreckt. Die Winglets 19, 20 können beim Betrieb Passiergut aus den Nischen 7 schöpfen. Außerdem sind die in Drehrichtung voraneilenden Kanten 21, 22 der Winglets als Schneidkanten ausgebildet, die feste Bestandteile des in den Nischen 7 festgehaltenen Passierguts zerkleinern können.

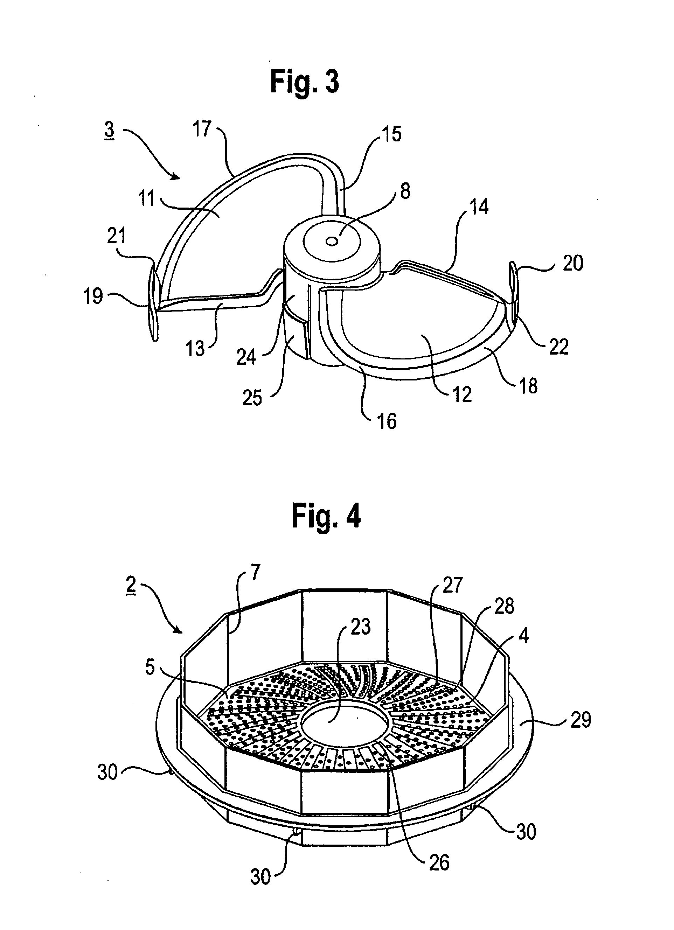

Das Nabenteil 8 des Passierwerkzeugs 3 ragt durch eine zentrale Öffnung 23 im Topfboden 5 des Siebteils 2. Passierwerkzeug 3 und Siebteil 2 sind durch eine Rastverbindung verbunden, die durch auf gegenüberliegenden Seiten der Nabe zwischen den Passierflügeln angebrachte Zungen 24 gebildet wird, von denen in Fig. 3 eine 24 zu sehen ist. Die Zungen 24 sind im oberen Bereich der Nabe 8 angebracht und erstreckt sich vorn dort nach unten. Sie sind auf ihrer Unterseite mit wiederhakenartigen Vorsprüngen 25 ausgestattet, die unter dem Rand 26 der Öffnung 23 reichen und so Passierwerkzeug 3 und Siebteil 2 verbinden. Die Zungen 24 sind senkrecht zu Ihrer Erstreckungsrichtung nach innen elastisch verbiegbar. Deshalb kann ein Benutzer die Laschen 24 nach innen drücken, um, etwa zu Reinigungszwecken, das Passierwerkzeug 3 vom Siebteil 2 zu lösen.

Siebteil 2 und Passierwerkzeug 3 sind im Spritzgussverfahren aus Kunststoff gefertigt. Der Rand 26 der Öffnung 23 im Siebteil 2 ist mit einem Ring aus Edelstahl abgedeckt, um Reibung zwischen dem Rand 26 und dem Nabenteil 8 zu minimieren.

Am Topfboden 5 des Siebteiles 2 sind ferner sich strahlenförmig vom Mittenbereich des Topfbodens 5 aus zu dem Topfmantel 6 hin erstreckende Bodenvertiefungen vorgesehen, (von denen eine exemplarisch mit 27 bezeichnet ist und) in denen ein Teil der Durchtrittsöffnungen 4 angeordnet ist. Die Bodenvertiefungen 27 weisen jeweils einen keilförmigen Querschnitt auf, sodass sie eine in Drehrichtung der Passierflügel 11, 12 abfallende Flanke mit einer scharfen Kante 28 auf der in Drehrichtung liegenden Begrenzungsseite der Bodenvertiefungen 27 haben. Die scharfen Kanten 28 bilden mit den in Drehrichtung nacheilenden Kanten 13, 14 der Passierflügel Schneidspalte, die festere Bestandteile des Passiergutes zerkleinern können. Die Bodenvertiefungen 27 sind sichelförmig gegen die Drehrichtung der Passierflügel 11, 12 gebogen. Damit kommen die scharfen Kanten 28 mit den in Drehrichtung nacheilenden Kanten 13, 14 der Passierflügel 11, 12 bei deren Drehbewegung über ihre gesamte radiale Erstreckung nur nach und nach zur Überschneidung. Mit anderen Worten, die Überschneidung der Flügelkanten 11, 12 und den scharfen Kanten 28 erfolgt stetig, sodass Belastungsstöße für den Antriebsmotor vermieden werden.

Das Siebteil 2 ist so ausgebildet, dass es in die Rührschüssel einer Küchenmaschine eingesetzt werden kann. Dazu ist das Siebteil mit einem ringförmigen äußeren Vorsprung 29 versehen, auf dessen Unterseite sich radial nach außen erstreckende Rippenansätze 30 (drei der Rippenansätz sind in Fig. 4 zu sehen) vorgesehen sind, die mit an der Rührschüssel angeprägten Rippen zusammenwirken um das Siebteil gegen Verdrehen zu sichern.

Mit dem erfindungsgemäßen Passiergerät lässt sich auch Passiergut mit festeren Bestandteilen, zum Beispiel reife Tomaten, passieren.

## Patentansprüche

1. Passiergerät (1) für die Verwendung mit einer Küchenmaschine, umfassend ein topfförmig ausgebildetes Siebteil (2) mit einem mit Durchtrittsöffnungen (4) versehenen Topfboden (5) und einem den Topfboden (5) kragenförmig umschließenden Topfmantel (6) und ein Passierwerkzeug (3) mit einem an eine Antriebswelle der Küchenmaschine ankuppelbaren Nabenteil (8), um das Passierwerkzeug (3) um eine in Längsrichtung des Topfmantels (6) verlaufende Drehachse (A) rotierend anzutreiben, und wenigstens zwei sich von dem Nabenteil (8) radial nach außen erstreckenden Passierflügeln (11, 12), wobei die bei der vorgesehenen Drehrichtung voreilende Kante (15, 16) jedes Passierflügels (11, 12) wenigstens auf einem Teilabschnitt mit einer ersten Schneidkante ausgestattet ist, um Passiergut zu zerkleinern,
**dadurch gekennzeichnet, dass**
am äußeren Ende jedes Passierflügels (11, 12) eine in Längsrichtung des Topfmantels (6) verlaufende zweite Schneidkante (21, 22) angeordnet ist,
und der Topfmantel (6) entlang seines Umfangs auf seiner Innenseite mindestens einen nischenartigen Abschnitt (7) aufweist, der einen größeren Abstand von der Drehachse (A) hat als ein anderer Abschnitt der Innenseite des Topfmantels (6),
wobei die zweite Schneidkante (21, 22) durch eine in eine vorgesehenen Drehrichtung voreilende Kante eines am Ende des Passierflügels (11, 12) senkrecht angeordneten Winglets (19, 20) gebildet ist, das feste Bestandteile von in den nischenartigen Abschnitten (7) festgehaltenen Passierguts zerkleinern kann und sich parallel zum Topfmantel (6) erstreckt.

2. Passiergerät (1) nach Anspruch 1, **dadurch gekennzeichnet, dass** der Querschnitt der Innenseite des Topfmantels (6) in einer Ebene senkrecht zur Drehachse (A) ein Vieleck ist.

3. Passiergerät (1) nach einem der vorherigen Ansprüche, **dadurch gekennzeichnet, dass** die Innenseite des Topfbodens (5) des Siebteils (2) nach innen gewölbt ist.

4. Passiergerät (1) nach einem der vorherigen Ansprüche, **dadurch gekennzeichnet, dass** das Passierwerkzeug (3) im Siebteil (2) so anordbar ist, dass eine bei einer vorgesehenen Drehrichtung im Betrieb nacheilende Kante (13, 14) des Passierflügels (11, 12) in geringem Abstand über dem Topfboden (5) rotiert.

5. Passiergerät (1) nach Anspruch 4, **dadurch gekennzeichnet, dass** der Passierflügel (11, 12) in Umfangsrichtung derart angestellt ist, dass bei der vorgesehenen Drehrichtung des Passierflügels (11, 12) eine voreilende Kante (15, 16) des Passierflügels (11, 12) gegenüber der nacheilenden Kante (13, 14) angehoben ist.

6. Passiergerät (1) nach Anspruch 1, **dadurch gekennzeichnet, dass** die bei der vorgesehenen Drehrichtung voreilende Kante (15, 16) des Passierflügels (11, 12) zumindest in einem äußeren Abschnitt (17, 18) mit zunehmendem Abstand von dem Nabenteil (8) entgegen der vorgesehenen Drehrichtung verläuft.

7. Passiergerät (1) nach einem der vorherigen Ansprüche, **dadurch gekennzeichnet, dass** zwei im Wesentlichen gleiche Passierflügel (11, 12) auf gegenüberliegenden Seiten am Nabenteil (8) angeordnet sind.

8. Passiergerät (1) nach einem der vorherigen Ansprüche, **dadurch gekennzeichnet, dass** der Topfboden (5) eine Öffnung (23) für das Nabenteil (8) aufweist und das Nabenteil (8) oder das Siebteil (2) mindestens ein Rastelement (24) aufweist, das mit dem anderen der beiden Teile zusammenwirkt, um das Siebteil (2) und das Passierwerkzeug (3) lösbar miteinander zu verbinden.

9. Passiergerät (1) nach einem der vorherigen Ansprüche, **dadurch gekennzeichnet, dass** zumindest ein Teil der Durchtrittsöffnungen (4) des Siebteiles (2) in an dessen Topfboden (5) ausgeprägten, sich zumindest annähernd strahlenförmig erstreckenden Bodenvertiefungen (27) vorgesehen ist, wobei die Bodenvertiefungen (27) einen keilförmigem Querschnitt mit einer in Drehrichtung des Passierflügels (11, 12) voraneilenden, abfallenden Flanke aufweisen.

10. Passiergerät (1) nach Anspruch 9, **dadurch gekennzeichnet, dass** die abfallende Flanke und die in Drehrichtung nacheilende Kante (13, 14) des Passierflügels (11, 12) unter Bildung eines Schneidspalts zueinander angeordnet sind.

11. Passiergerät (1) nach Anspruch 9 oder 10, **dadurch gekennzeichnet, dass** die Bodenvertiefungen (27) in ihrer Strahlrichtung einen entgegen der Drehrichtung dem Passierflügel (11, 12) gebogenen sichelförmigen Verlauf aufweisen.

12. Passiergerät (1) nach einem der vorherigen Ansprüche, **dadurch gekennzeichnet, dass** die Durchtrittsöffnungen (4) zu der Austrittsseite des Passiergutes hin in ihrem Querschnitt erweitert sind.

13. Passiergerät (1) nach einem der vorherigen Ansprüche, **dadurch gekennzeichnet, dass** das Siebteil (2) drehfest in eine Rührschüssel einer Küchenmaschine einsetzbar ist.

14. Passiergerät nach Anspruch 13, **dadurch gekennzeichnet, dass** an dem Siebteil Rippenansätze (30) vorgesehen sind, die mit entsprechenden, an der Rührschüssel ausgebildeten Rippen zusammenwirken.

## Claims

1. Straining device (1), especially for use with a kitchen appliance, comprising a sieve part (2) embodied in the shape of a dish with a dish base (5) provided with through-openings (4) and a dish sleeve (6) enclosing the dish base (5) in the form of a collar and a straining tool (3) with a hub piece (8) able to be coupled to a drive shaft, in order to drive the straining tool (3) rotatably around an axis of rotation (A) running in longitudinal direction of the dish sleeve (6), and at least two straining blades (11, 12) extending from the hub piece (8) radially outwards, wherein the leading edge (15, 16) of each straining blade (11, 12) in the intended direction of rotation, at least over a part section, is equipped with a first cutting edge in order to chop up items to be strained,
**characterised in that**
a second cutting edge (21, 22) running in the longitudinal direction of the dish sleeve (6) is arranged at the outer end of each straining blade (11, 12),
and the dish sleeve (6) has at least one slit-like section (7) along its circumference which is at a greater distance from the axis of rotation (A) than another section of the inside of the dish sleeve (6),
wherein the second cutting edge (21, 22) is formed by a leading edge of a winglet (19, 20) arranged perpendicularly at the end of the straining blade (11, 12) in the intended direction of rotation, which can chop solid elements of the items to be strained held in the slit-like sections (7) and extends in parallel to the dish sleeve (6).

2. Straining device (1) according to claim 1, **characterised in that** the cross-section of the inside of the dish sleeve (6) in a plane perpendicular to the axis of rotation (A) is a polygon.

3. Straining device (1) according to one of the previous claims, **characterised in that** the inside of the dish base (5) of the sieve part (2) is curved inwards.

4. Straining device (1) according to one of the previous claims, **characterised in that** the straining tool (3) is able to be arranged in the sieve part (2) so that a trailing edge (13, 14) of the straining blade (11, 12) in the intended direction of rotation rotates at a slight distance above the dish base (5) during operation.

5. Straining device (1) according to claim 4, **characterised in that** the straining blade (11, 12) is set in the circumferential direction so that, in the intended direction of rotation of the straining blade (11, 12) a leading edge (15, 16) of the straining blade (11, 12) is raised relative to the trailing edge (13, 14).

6. Straining device (1) according to claim 1, **characterised in that**, the leading edge (15, 16) of the straining blade (11, 12) in the intended direction of rotation at least in an outer section (17, 18), as the distance from the hub piece (8) increases, runs against the intended direction of rotation.

7. Straining device (1) according to one of the previous claims, **characterised in that** two essentially identical straining blades (11, 12) are arranged on opposite sides on the hub piece (8).

8. Straining device (1) according to one of the previous claims, **characterised in that** the dish base (5) has an opening (23) for the hub piece (8) and the hub piece (8) or the sieve part (2) has at least one locking element (24) which interacts with the other of the two parts in order to connect the sieve part (2) and the straining tool (3) detachably with each other.

9. Straining device (1) according to one of the previous claims, **characterised in that** at least some of the through-openings (4) of the sieve part (2) are provided in floor indentations (27) stamped on its dish base (5) extending at least approximately radially, with the floor indentations (27) having a wedge-shaped cross-section with a leading, falling edge in the direction of rotation of the straining blade (11, 12).

10. Straining device (1) according to claim 9, **characterised in that** the falling edge and the trailing edge (13, 14) of the straining blade (11, 12) in the direction of rotation are arranged in relation to each other to form a cutting gap.

11. Straining device (1) according to claim 9 or 10, **characterised in that** the floor indentations (27) in their radiation direction have a curved sickle-shaped course against the direction of rotation of the straining blade (11, 12).

12. Straining device (1) according to one of the previous claims, **characterised in that** the through-openings (4) are expanded in their cross section towards the exit side of the item to be strained.

13. Straining device (1) according to one of the previous claims, **characterised in that** the sieve part (2) is able to be inserted in a mixing bowl of a kitchen appliance so that it does not turn.

14. Straining device (1) according to claim 13, **characterised in that** rib elements (30) are provided on the sieve part and interact with corresponding ribs embodied on the mixing bowl.

## Revendications

1. Passe-légumes (1) pour utilisation avec un robot ménager, comprenant une pièce de passoire (2) réalisée en forme de pot, dotée d'un fond de pot (5) muni d'orifices de passage (4) et d'une enveloppe de pot (6) en forme de collerette, entourant le fond de pot (5), et comprenant un outil de passoire (3) doté d'une partie en came (8) pouvant être accouplée à un arbre d'entraînement du robot ménager afin d'entraîner l'outil de passoire (3) de manière rotative autour d'un axe de rotation (A) s'étendant en direction longitudinale de l'enveloppe de pot (6), et comprenant au moins deux ailes de passoire (11, 12) s'étendant de la partie en came (8) radialement vers l'extérieur, l'arête avant (15, 16), dans le sens de rotation ménagé, de chaque aile de passoire (11, 12) étant équipée sur une section partielle d'une première arête coupante afin de broyer des aliments à passer à la passoire,
**caractérisé en ce que**
sur l'extrémité extérieure de chaque aile de passoire (11, 12) est disposée une seconde arête coupante (21, 22) s'étendant dans le sens longitudinal de l'enveloppe de pot (6),
et **en ce que** l'enveloppe de pot (6) présente le long de sa circonférence sur son côté intérieur au moins une section (7) en forme d'enfoncement, qui a un écart plus grand par rapport à l'axe de rotation (A) qu'une autre section du côté intérieur de l'enveloppe de pot (6),
la seconde arête coupante (21, 22) étant formée par une arête avant, dans le sens de rotation ménagé, d'une ailette (19, 20), disposée verticalement à l'extrémité de l'aile de passoire (11, 12), pouvant broyer des ingrédients solides d'aliments à passer à la passoire retenus dans les sections (7) en forme d'enfoncement et s'étendant parallèlement à l'enveloppe de pot (6).

2. Passe-légumes (1) selon la revendication 1, **caractérisé en ce que** la section transversale du côté intérieur de l'enveloppe de pot (6), dans un plan perpendiculaire à l'axe de rotation (A), est un polygone.

3. Passe-légumes (1) selon l'une quelconque des revendications précédentes, **caractérisé en ce que** le côté intérieur du fond de pot (5) de la pièce de passoire (2) est bombé vers l'intérieur.

4. Passe-légumes (1) selon l'une quelconque des revendications précédentes, **caractérisé en ce que** l'outil de passoire (3) peut être disposé dans la pièce de passoire (2) de manière à ce qu'une arête arrière (13, 14) de l'aile de passoire (11, 12), en fonctionnement dans le sens de rotation ménagé, tourne au-dessus du fond de pot (5) avec un écart moindre.

5. Passe-légumes (1) selon la revendication 4, **caractérisé en ce que** l'aile de passoire (11, 12) est placée de telle manière dans le sens circonférentiel qu'une arête avant (15, 16) de l'aile de passoire (11, 12), dans le sens de rotation ménagé de l'aile de passoire (11, 12), est soulevée par rapport à l'arête arrière (13, 14).

6. Passe-légumes (1) selon la revendication 1, **caractérisé en ce que** l'arête avant (15, 16) de l'aile de passoire (11, 12), dans le sens de rotation ménagé, s'étend, au moins dans une section extérieure (17, 18), avec un écart augmentant par rapport à la pièce en came (8), en sens inverse du sens de rotation ménagé.

7. Passe-légumes (1) selon l'une quelconque des revendications précédentes, **caractérisé en ce que** deux ailes de passoire (11, 12) essentiellement identiques sont disposées sur la pièce en came (8) sur des côtés opposés.

8. Passe-légumes (1) selon l'une quelconque des revendications précédentes, **caractérisé en ce que** le fond de pot (5) présente une ouverture (23) pour la pièce en came (8) et **en ce que** la pièce en came (8) ou la pièce de passoire (2) présente au moins un élément d'encliquetage (24) qui coopère avec l'autre des deux pièces afin de relier entre elles de manière amovible la pièce de passoire (2) et l'outil de passoire (3).

9. Passe-légumes (1) selon l'une quelconque des revendications précédentes, **caractérisé en ce qu'**au moins une partie des orifices de passage (4) de la pièce de passoire (2) est ménagée dans des approfondissements de fond (27) s'étendant au moins approximativement en forme de rayons, estampés sur le fond de pot (5) de la pièce de passoire, les approfondissements de fond (27) présentant une section transversale en forme de clavette avec un flanc descendant dans le sens de rotation de l'aile de passoire (11, 12).

10. Passe-légumes (1) selon la revendication 9, **caractérisé en ce que** le flanc descendant et l'arête arrière (13, 14) de l'aile de passoire (11, 12), dans le sens de rotation, sont disposés en formant une fente de coupe l'un par rapport à l'autre.

11. Passe-légumes (1) selon la revendication 9 ou 10, **caractérisé en ce que** les approfondissements de fond (27) présentent, dans leur sens de rayonnement, une allure en forme de croissant, bombée en sens inverse du sens de rotation de l'aile de passoire (11, 12).

12. Passe-légumes (1) selon l'une quelconque des revendications précédentes, **caractérisé en ce que** les orifices de passage (4) sont élargis dans leur section transversale, en direction du côté de sortie des ingrédients passés à la passoire.

13. Passe-légumes (1) selon l'une quelconque des revendications précédentes, **caractérisé en ce que** la pièce de passoire (2) est insérable de manière résistante à la rotation dans un bol mélangeur d'un robot ménager.

14. Passe-légumes (1) selon la revendication 13, **caractérisé en ce que** des bouts de nervure (30) sont ménagés sur la pièce de passoire, lesquels coopèrent avec des nervures réalisées sur le bol mélangeur.
